# EUROPÄISCHE PATENTSCHRIFT

(11) **EP 0 524 176 B1**
(45) Veröffentlichungstag und Bekanntmachung des Hinweises auf die Patenterteilung: **16.02.1994**
(21) Anmeldenummer: 91901754.1
(22) Anmeldetag: 28.12.1990
(51) Int. Cl.: B65G 45/16

(54) **VERTIKALSPANNVORRICHTUNG FÜR FÖRDERBANDABSTREIFER UND DERGLEICHEN**
VERTICAL CLAMPING DEVICE FOR BELT CONVEYOR STRIPPERS AND THE LIKE
DISPOSITIF DE SERRAGE VERTICAL POUR RACLEURS DE BANDE TRANSPORTEUSE ET SIMILAIRE

(30) Priorität: 30.12.1989 DE 8915279 U
(43) Veröffentlichungstag der Anmeldung: 27.01.1993
(73) Patentinhaber: VSR Engineering GmbH Fördertechnik, D-45472 Mülheim (DE)
(72) Erfinder: RAPPEN, Albert, D-4330 Mülheim/Ruhr (DE)
(74) Vertreter: Schumacher, Horst, Dr. Dipl.-Phys.
(86) Internationale Anmeldenummer: EP9002328
(87) Internationale Veröffentlichungsnummer: WO9110609

(56) Entgegenhaltungen:
- WO-A-88/00916
- DE-A- 2 008 706
- DE-B- 1 033 126
- FR-A- 2 376 806
- US-A- 2 794 540

## Beschreibung

Die Erfindung betrifft eine Vertikalsoannvorrichtung der im Oberbegriff des Anspruchs 1 genannten Art.

Üblicherweise werden die mit einer quer zum Förderband verlaufenden Achse befestigten Abstreifelemente durch vertikales Verstellen der Achse oder Tordieren derselben mit der Schabeklinge gegen das Band gedrückt. Beim Vertikalverstellen wird in der einfachsten Form die Achshalterung beiderseits des Gurtes vertikal verschoben und dann an einer vertikalen Strebe oder Wand festgeklemmt.

Die Verstellung wird vereinfacht, indem die Achsträger durch eine vertikal stehende Stellschraube verschoben oder aber die Achshalterung längs einer vertikal stehenden Gewindespindel dadurch verschoben wird, daß auf dieser Muttern verdreht werden.

Diese Verstellungen sind sehr zeitaufwendig. Zudem verschmutzen die Gewindegänge und sind dann schwer zu betätigen. Im übrigen muß jede Seite einzeln eingestellt werden.

Es ist daher Aufgabe der Erfindung, hier Abhilfe zu schaffen und eine leichte einfache Vertikalverstellung von einer Seite des Förderbandes aus zu ermöglichen. Das geschieht erfindungsgemäß durch eine Vertikalspann- bzw. Verstellvorrichtung mit den Merkmalen des Anspruchs 1. Bevorzugte Ausführungsformen ergeben sich aus den Unteransprüchen und der nachfolgenden Beschreibung der Zeichnung. Erfindungsgemäß wird an dem seitlichen Förderbandgehäuse oder an einer entsprechenden Halterung mit Lochstange eine Lagerplatte 1 mittels Langlöchern 2 befestigt. Diese Lagerplatte hat gegenüberliegende Vertikal- 3 und Horizontalführungsflächen 4, zwischen denen, die Achse 5 zur an sich bekannten Aufnahme der Gurtabstreifelemente 6 angeordnet ist.

Die Achse hat parallele Flächen 7, die zwischen die Vertikalführungsflächen 3 fassen, so daß in beliebiger Höhenlage der Achse 5 ein Drehmoment von der Achse 5 auf die Halterung 1 übertragen werden kann. Vorzugsweise werden rohrförmige runde Achsen 5 eingesetzt, und das Rohr wird von einem ringförmigen Führungselement 9 umschlossen, das parallele Führungsflächen 7 hat. Diese können mit der Achse in beliebiger Verdrehstellung mit der Achse 5 verriegelt werden, vorzugsweise durch eine Stellschraube 10.

Die Achse 5 wird ferner von einem ringförmigen Exzenterelement 11 umschlossen, daß eine exzentrische Kurvenscheibe 12 trägt. Die Kurvenscheibe 12 paßt zwischen die horizontal verlaufenden Anschlagflächen 4 der Halteplatte 1. Durch Verdrehen des Exzenters 11 wird die Achse 5 angehoben oder gesenkt. Die jeweilige Position kann verriegelt werden, indem das Verdrehen des Exzenters 11 gegenüber der Achse 5 durch Verklemmen verhindert wird, z.B. durch Festsetzen einer Stellschraube 13.

Der Exzenter 11 hat stirnseitig mindestens zwei parallele Flächen 14, vorzugsweise in Form eines Sechskantes oder einer Bohrung, so daß über diese ein Moment zum Verdrehen des Exzenters aufgebracht werden kann.

Der innere Teil des Sechskantes enthält eine axiale Bohrung 15, durch die eine zur Hauptachse 5 konzentrische Längsachse 18 geschoben wird, die in die Bohrung 15 des Exzenters 11 auf der anderen Seite des Förderbandes faßt und die mit den beidseitigen Exzentern 11 verdrehfest verbunden wird. Durch Verdrehen des einem Exzenters 11 wird der Exzenter auf der anderen Seite des Fördergurtes um den gleichen Verdrehwinkel verstellt, so daß die Hauptachse 5 gleichmäßig angehoben wird.

Die feste Verbindung zwischen der Verdrehachse und dem Exzenter erfolgt vorzugsweise durch eine Stellschraube 16, kann aber auch in anderer Ausführungsform durch Verklemmen oder formschlüssig erfolgen, indem eine Vieleckachse verwendet wird und die Bohrung im Exzenter dasselbe Vieleckmaß beinhaltet.

Die Verstellung erfolgt besonders leicht, wenn entweder die Halteplatte 1 oder/und das Gleitstück (Führungselement 9) und/oder die Exzenterscheibe 12 und/oder die Führungen 3,4 aus einem reibarmen hochfesten Kunststoff hergestellt werden.

Aus der perspektivisch dargestellten erfindungsgemäRen Vertikalspannvorrichtung, die ohne das sie haltende Förderbandgehäuse oder dergleichen in der Zeichnung wiedergegeben ist, ist ersichtlich, daß die Vorrichtung an beiden Seiten des Förderbandes 8 gleich ausgestaltet ist. Bei dieser Ausführungsform weisen die Halteplatten 1 etwa rechteckige Durchbrechungen auf, die von den Führungsflächen 3 bzw. 4 begrenzt werden. Beim Verdrehen des Exzenters 11 wandert der Flächenschwerpunkt der Kurvenscheibe 12 seitlich aus, während sich gleichzeitig die Achse 5 hebt bzw. senkt.

Es leuchtet ein, daß die in der Zeichnung linke Halterung 1 auf ihrer dem Förderband 8 zugewandten Seite in gleicher Weise wie die sichtbare Seite der in der Zeichnung rechten Halterung 1 ausgestaltet ist. Entsprechendes gilt für die vom Förderband fortweisende Seite der in der Zeichnung rechten Halterung 1, die genauso aufgebaut ist, wie die sichtbare Seite der in der Zeichnung linken Halterung 1.

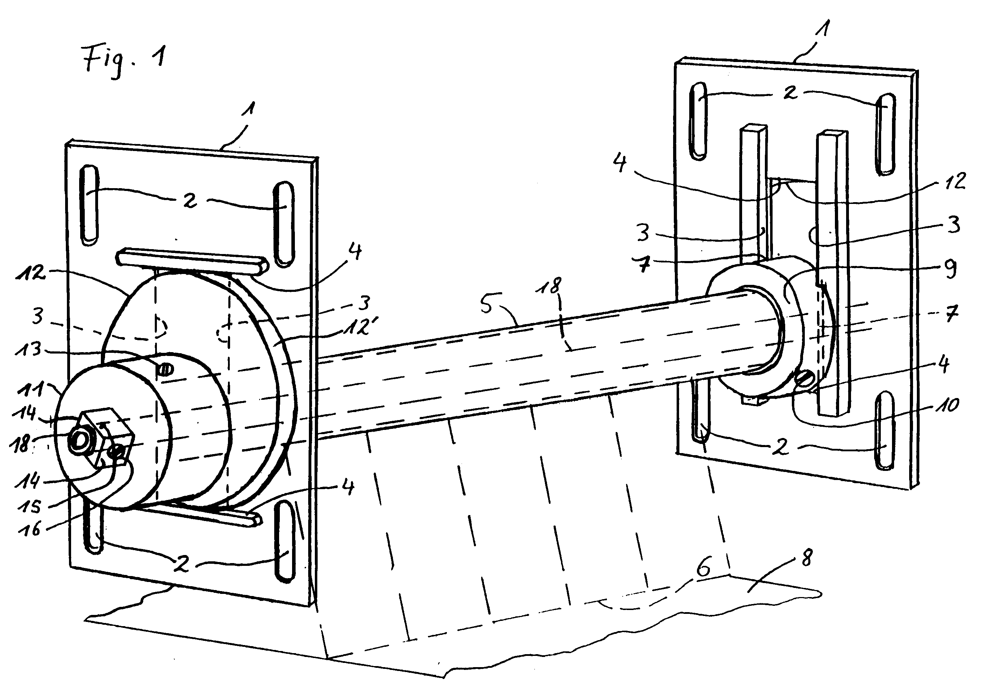

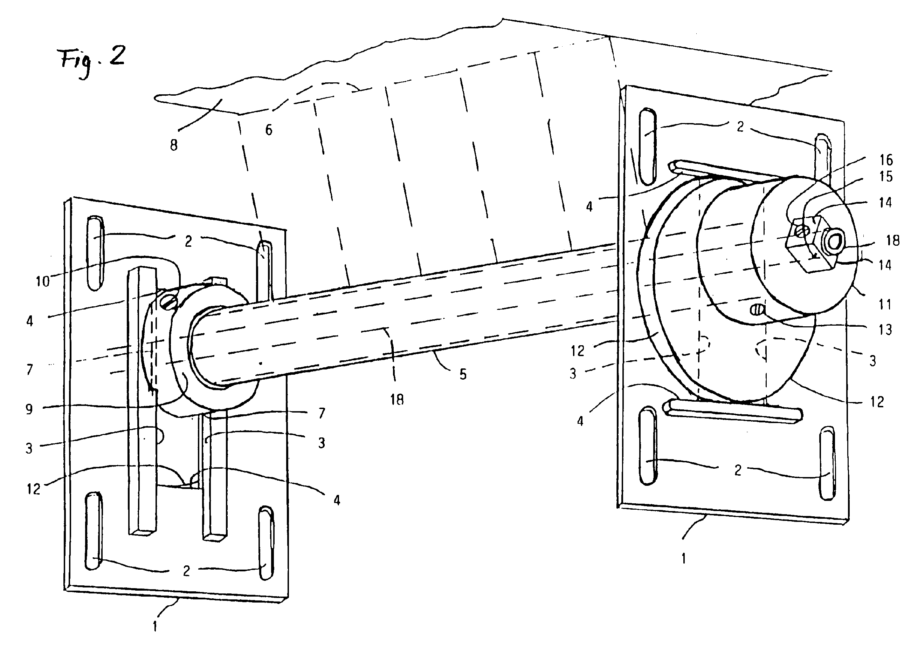

Während die vorangehend beschriebene Fig. 1 den Fördergurt unterhalb der Spannvorrichtung zeigt, zeigt Fig. 2, gemäß einer bevorzugten Ausführungsform - bei sonst völliger Identität -, daß sich der Fördergurt 8 oberhalb der Spannvorrichtung befindet.

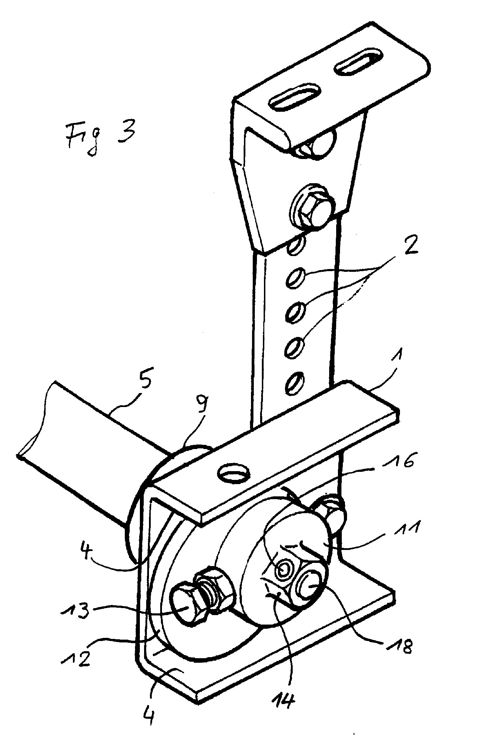

Eine praktische Ausführungsform der Erfindung ist in Fig. 3 unter Fortlassung des Gurtabstreiferelementes und des Förderbandes dargestellt, wobei gleichwirkende Mittel mit identischen Bezugszeichen wie in Fig. 1 und 2 beziffert sind. Erkennbar übernehmen die Schenkel des als Lagerplatte 1 verwendeten U-Profiles auf ihrer Innenseite die Funktion von Horizontalführungsflächen 4.

## Patentansprüche

1. Vertikalspannvorrichtung, vorzugsweise für Förderbandabstreifer, bestehend aus einer Achse (5) als Träger für die Abstreifelemente (6) und einer verstellbaren Halteeinrichtung zur Befestigung an dem Förderbandgehäuse oder einer Befestigungskonsole oder dergleichen dadurch gekennzeichnet,
daß die Halteeinrichtung (1) je zwei gegenüberliegende vertikale und horizontale parallele Führungsflächen (3, 4) zur Höhenverstellung der an den vertikalen Führungsflächen (3) verschiebbar gelagerten Achse (5) mittels exzentrischer Führungsscheiben (Exzenterscheiben 12), die zwischen den horizontalen Führungsflächen (4) angeordnet sind, aufweist.

2. Vertikalspannvorrichtung nach Anspruch 1 dadurch gekennzeichnet, daß die Achse (5) Führungsflächen (7) hat, die entlang der Führungsflächen (3) der Halteplatte (1) ein vertikales Verstellen der Achse (5) erlauben.

3. Vertikalspannvorrichtung nach Ansoruch 1 oder 2 dadurch gekennzeichnet, daß Führungsflächen (7) der Achse (5) sich an einem Gleitstück (Führungselement 9) befinden, das mit der, vorzugsweise runden, Trägerachse (5) vorzugsweise in jeder Verdrehstellung fest verbunden werden kann, vorzugsweise durch Klemmen oder durch eine Stellschraube (10).

4. Vertikalspannvorrichtung nach einem der Ansorüche 1 bis 3 dadurch gekennzeichnet, daß über die Achse (5) ein Exzenter (11) geschoben ist, der vorzugsweise mit einem Klemmring oder einer Stellschraube (13) fest mit der Achse (5) verbunden ist und daß der Exzenter (11) eine exzentrische Kurvenscheibe (Exzenterscheibe 12) trägt, die sich mit der Umfangsfläche (12') gegen die horizontalen Führungsflächen (4) der Halteplatte (1) abstützt.

5. Vertikalspannvorrichtung nach einem der Ansprüche 1 bis 4 dadurch gekennzeichnet, daß ein Exzenter (11) zwei parallele Flächen (14), vorzugsweise in Form eines Sechskantes oder einer Querbohrung, besitzt, durch die ein Drehmoment zur Verdrehung des Exzenters (11) im nicht geklemmten Zustand aufgebracht wird.

6. Vertikalspannvorrichtung nach einem der Ansprüche 1 bis 5 dadurch gekennzeichnet, daß Exzenter (11) auf jeder Seite der Achse (5) mittels einer durch Längsbohrungen (15) verlaufenden Achse (18) fest verbunden sind, vorzugsweise durch Klemmen oder eine Stellschraube (16).

7. Vertikalspannvorrichtung nach einem der Ansprüche 1 bis 6 dadurch gekennzeichnet, daß die parallelen Führungsflächen (3,4) der Halteplatten (1) und/oder die Führungsflächen des Klemmstückes (9) und/oder der Exzenterscheibe (12) aus reibarmen Kunststoff bestehen.

## Claims

1. A vertical clamping device, preferably for belt conveyor strippers, comprising an axle (5) as a support for the stripper elements (6) and an adjustable holding device for securing to the belt conveyor housing or a securing bracket or the like, characterised in that the holding device (1) comprises two vertical and two horizontal oppositely arranged, parallel guide surfaces (3, 4) for the vertical adjustment of the axle (5), which is mounted so as to be displaceable along the vertical guide surfaces (3), by means of eccentric guide discs (eccentric discs 12), which are arranged between the horizontal guide surfaces (4).

2. A vertical clamping device according to claim 1, characterised in that the axle (5) has guide surfaces (7), which allow for a vertical adjustment of the axle (5) along the guide surfaces (3) of the holding plate (1).

3. A vertical clamping device according to claim 1 or 2, characterised in that guide surfaces (7) of the axle (5) are provided on a slide element (guide element 9), which can be fixedly connected to the preferably round support axle (5), preferably in each rotational position, preferably by clamping or by means of an adjusting screw (10).

4. A vertical clamping device according to one of claims 1 to 3, characterised in that an eccentric (11), which is preferably fixedly connected to the axle (5) by means of a clamping ring or an adjusting screw (13), is pushed over the axle (5), and the eccentric (11) carries an eccentric cam (eccentric disc (12), which is supported via its circumferential surface (12') against the horizontal guide surfaces (4) of the holding plate (1).

5. A vertical clamping device according to one of claims 1 to 4, characterised in that an eccentric (11) comprises two parallel surfaces (14), preferably in the form of a hexagon or a transverse bore, via which a torque is applied for the rotation of the eccentric (11) in the non-clamped state.

6. A vertical clamping device according to one of claims 1 to 5, characterised in that eccentrics (11) are fixedly connected to each end of the axle (5) by means of an axle (18) extending through longitudinal bores (15), preferably by clamping or by means of an adjusting screw (16).

7. A vertical clamping device according to one of claims 1 to 6, characterised in that the parallel guide surfaces (3, 4) of the holding plate (1) and/or the guide surfaces of the clamping element (9) and/or of the eccentric disc (12) are made of wear-resistant plastics material.

## Revendications

1. Dispositif de serrage vertical, de préférence pour racleurs de bandes transporteuses, constitué d'un axe (5) servant de support aux éléments de raclage (6) et d'un dispositif de maintien réglable pour la fixation sur le carter de la bande transporteuse ou sur une console de fixation ou similaire, caractérisé en ce que le dispositif de maintien (1) comporte deux surfaces de guidage (3, 4) parallèles, verticales et horizontales opposées l'une à l'autre pour le réglage en hauteur de l'axe (5) monté coulissant sur les surfaces de guidage verticales (3) au moyen de disques de guidage excentriques (disque d'excentrique 12), qui sont placés entre les surfaces de guidage horizontales (4).

2. Dispositif de serrage vertical selon la revendication 1, caractérisé en ce que l'axe (5) possède des surfaces de guidage (7) qui permettent un réglage vertical de l'axe (5), le long des surfaces de guidage (3) de la plaque de maintien (1).

3. Dispositif de serrage vertical selon les revendications 1 ou 2, caractérisé en ce que des surfaces de guidage (7) de l'axe (5) se trouvent sur un coulisseau (élément de guidage 9), qui peut être rendu solidaire, de préférence par serrage ou par une vis de réglage (10) de l'axe de support (5), de préférence rond, de préférence dans chaque position de rotation.

4. Dispositif de serrage vertical selon l'une des revendications 1 à 3, caractérisé en ce qu'un excentrique (11), qui est de préférence lié de manière fixe avec l'axe (5), par un anneau de serrage ou une vis de réglage (13), est poussé par l'intermédiaire de l'axe (5) et en ce que l'excentrique (11) porte un disque à came excentrique (disque d'excentrique 12) qui prend appui avec la surface périphérique (12') contre les surfaces de guidage horizontales (4) de la plaque de maintien (1).

5. Dispositif de serrage vertical selon l'une des revendications 1 à 4, caractérisé en ce qu'un excentrique (11) possède deux surfaces (14) parallèles, de préférence sous la forme d'un hexagone ou d'un alésage transversal, par lequel un couple de rotation est appliqué à l'état non serré, pour faire tourner l'excentrique (11).

6. Dispositif de serrage vertical selon l'une des revendications 1 à 5, caractérisé en ce que des excentriques (11) sont reliés de manière fixe de préférence par serrage ou au moyen d'une vis de réglage (16) sur chaque côté de l'axe (5) au moyen d'un axe (18) traversant des alésages allongés (15).

7. Dispositif de serrage vertical selon l'une des revendications 1 à 6, caractérisé en ce que les surfaces de guidage parallèles (3, 4) des plaques de maintien (1) et/ou les surfaces de guidage de la pièce de serrage (9) et/ou du disque d'excentrique (12) sont réalisées dans une matière synthétique peu sujette à friction.
